# EUROPEAN PATENT APPLICATION

(11) **EP 4 579 938 A1**
(43) Date of publication of application: **02.07.2025**
(21) Application number: 23857034.5
(22) Date of filing: 18.07.2023
(51) Int. Cl.: H01M 50/593, H01M 10/052, H01M 10/0567, H01M 10/0587, H01M 50/107, H01M 50/152, H01M 50/586

(54) **NON-AQUEOUS ELECTROLYTE SECONDARY BATTERY**

(30) Priority: 23.08.2022 JP 2022132724
(71) Applicant: Panasonic Intellectual Property Management Co., Ltd., Kadoma-shi, Osaka 571-0057 (JP)
(72) Inventor: TAKEDA, Nanami, Kadoma-shi, Osaka 571-0057 (JP); OTAKE, Yuji, Kadoma-shi, Osaka 571-0057 (JP); DEGUCHI, Masaki, Kadoma-shi, Osaka 571-0057 (JP)
(74) Representative: Eisenführ Speiser
(86) International application number: PCT/JP2023/026226
(87) International publication number: WO 2024/042918

(57) **Abstract**

A nonaqueous electrolyte secondary battery including a wound electrode group, a nonaqueous electrolyte, a battery case having a cylindrical shape and housing the electrode group and the nonaqueous electrolyte, a sealing body sealing an opening of the battery case, and an insulating plate disposed between the electrode group and a bottom of the battery case. The nonaqueous electrolyte contains a sulfur-containing compound. The insulating plate has an aperture, in which (A) the aperture rate of the insulating plate is 10% or more, or (B) the aperture has a plurality of mutually independent regions.

## Description

### [Technical Field]

The present disclosure relates to a nonaqueous electrolyte secondary battery.

### [Background Art]

In a nonaqueous electrolyte secondary battery, an insulating plate for preventing internal short circuit is disposed between the electrode group and the bottom of the battery case, and between the electrode group and the sealing body.

Patent Literature 1 discloses a secondary battery including a sealing body provided with a valve for venting air, in which an insulating plate having a hole near the center is disposed between the electrode group and the sealing body. Patent Literature 2 proposes using an insulating plate 820, as illustrated in FIG. 8, having one semicircular hole 821 and three spot holes 822, in a plan view.

### [Citation List]

### [Patent Literature]

Patent Literature 1: International Publication WO2016/157749
Patent Literature 2: International Publication WO2013/099295

### [Summary of Invention]

### [Technical Problem]

Patent Literatures 1 and 2 both relate to improvement to an insulating plate (upper insulating plate) disposed between the electrode group and the sealing body. On the other hand, in an insulating plate (lower insulating plate) disposed between the electrode group and the bottom of the battery case, there is provided a hole for passing an electrode therethrough in order to weld a lead drawn out from the electrode group to the bottom of the battery case. It has been found out that, in the battery in an over-discharged state, if a nonaqueous electrolyte containing a sulfur-containing compound is retained in the hole, the open circuit voltage (OCV) of the battery drops, and the remaining capacity decreases.

### [Solution to Problem]

One aspect of the present invention relates to a nonaqueous electrolyte secondary battery, including: a wound electrode group; a nonaqueous electrolyte; a battery case having a cylindrical shape and housing the electrode group and the nonaqueous electrolyte; a sealing body sealing an opening of the battery case; and an insulating plate disposed between the electrode group and a bottom of the battery case, wherein the nonaqueous electrolyte contains a sulfur-containing compound, the insulating plate has an aperture, and an aperture rate of the insulating plate is 10% or more.

Another aspect of the present invention relates to a nonaqueous electrolyte secondary battery, including: a wound electrode group; a nonaqueous electrolyte; a battery case having a cylindrical shape and housing the electrode group and the nonaqueous electrolyte; a sealing body sealing an opening of the battery case; and an insulating plate disposed between the electrode group and a bottom of the battery case, wherein the nonaqueous electrolyte contains a sulfur-containing compound, the insulating plate has an aperture, and the aperture has a plurality of mutually independent regions.

### [Advantageous Effects of Invention]

According to the present disclosure, when a nonaqueous electrolyte secondary battery is in an over-discharged state, the drop in open circuit voltage (OCV) of the battery can be suppressed.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] A schematic top view of an insulating plate according to one embodiment of the present disclosure.
[FIG. 2] A schematic top view of an insulating plate according to another embodiment of the present disclosure.
[FIG. 3] A schematic top view of an insulating plate according to yet another embodiment of the present disclosure.
[FIG. 4] A longitudinal sectional view of a nonaqueous electrolyte secondary battery according to one embodiment of the present disclosure.

### [Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, when referring to "a range of a numerical value A to a numerical value B," the range includes the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. When a plurality of materials are mentioned as examples, one kind of them may be selected and used singly, or two or more kinds of them may be used in combination.

The present disclosure encompasses a combination of matters recited in any two or more claims selected from plural claims in the appended claims. In other words, as long as no technical contradiction arises, matters recited in any two or more claims selected from plural claims in the appended claims can be combined.

In the following description, the term "comprise" or "include" is an expression including meanings of "comprise (or include)," "essentially consist of," and "consist of."

Secondary batteries include at least nonaqueous electrolyte secondary batteries, such as lithium-ion batteries and lithium-metal secondary batteries.

A nonaqueous electrolyte secondary battery according to one embodiment of the present disclosure includes a wound electrode group, a nonaqueous electrolyte, a battery case having a cylindrical shape and housing the electrode group and the nonaqueous electrolyte, a sealing body sealing an opening of the battery case, and an insulating plate (hereinafter sometimes referred to as a "first insulating plate") disposed between the electrode group and a bottom of the battery case. The nonaqueous electrolyte secondary battery may further include an insulating plate (hereinafter sometimes referred to as a "second insulating plate") disposed between the electrode group and the sealing body. The nonaqueous electrolyte includes a sulfur-containing compound.

The battery case is, for example, a metal can. Examples of the material constituting the battery case include at least one selected from the group consisting of iron and an iron alloy (including stainless steel). The battery case may be plated (e.g., nickel plated), as necessary. The material constituting the battery case can be selected as appropriate depending on the polarity etc. of the battery case. In a battery case having a cylindrical shape, the battery case usually has a negative polarity.

The first insulating plate has an aperture. Here, the "aperture" means an aperture consisting of one or more regions (windows) passing through from one principal surface to the other principal surface of the first insulating plate. In other words, the "aperture" may be constituted of only one region (window), and may be constituted of two or more mutually independent regions (windows). The region (window) passing through from one principal surface to the other principal surface of the first insulating plate may be a through-hole, a through-groove, and the like. The shape of the through-hole or the through-groove is not particularly limited.

Here, the first insulating plate satisfies at least one of the following conditions (A) and (B).
(A) The aperture rate of the first insulating plate is 10% or more.
(B) The aperture has a plurality of mutually independent regions (windows).

Here, the orthogonal projection of the first insulating plate from the direction normal to one of the principal surfaces of the first insulating plate is referred to as a geometric shape D0. The ratio of the area corresponding to the aperture in D0 to the area surrounded by the outline contour of D0 (usually the area of a circle) is an "aperture rate."

The "plurality of mutually independent regions (windows)" mean a plurality of regions (windows) constituting the aperture, each of which is an isolated island-like region (window) that is not continuous with other regions (windows).

The conditions (A) and (B) are both conditions for dispersing the contact region between the bottom of the battery case and the nonaqueous electrolyte. The conditions (A) and (B) both allow the exposed portions of the bottom of the battery case that are not covered with the first insulating plate to be dispersed. By this, the interaction between the sulfur-containing compound and the bottom of the battery case is prevented from concentrating at a narrow region of the bottom.

When the battery falls into an over-discharge state, part of the nonaqueous electrolyte impregnated in the electrode group is released from the electrode group, and retained in the region surrounded by the bottom of the battery case and the peripheral wall of the aperture. The potential of the battery case in an over-discharged state reaches an elution potential of the material (e.g., Fe) constituting the battery case, causing a side reaction. When at least one of the conditions (A) and (B) is satisfied, the distribution of the retained nonaqueous electrolyte is dispersed. This eliminates or at least reduces the place where the side reaction proceeds excessively, so that an excessive drop in OCV can be prevented.

The aperture includes, for example, a first hole provided in the center of the first insulating plate. The first hole is constituted of one region (window). The aperture may be constituted of the first hole only, and may further include at least one second hole which is different from the first hole. The first hole is provided so as to include (or surround) the center (center of gravity) of the first insulating plate. The first hole serves to pass an electrode which is for welding a lead drawn out from the electrode group to the bottom of the battery case. The electrode for welding is inserted into the hollow in the center of the electrode group and contacted with the lead.

When a plurality of the second holes are provided around the first hole, the shape of the aperture (i.e., the shape formed by the first hole and the plurality of the second holes as a whole) is desirably a shape of rotational symmetry. If a two-dimensional geometrical shape is rotated about the center by (360/n)°, where n is an integer of 2 or more, and the shape overlaps with itself, the property of this geometrical shape (here, the shape of the "aperture") is referred to as rotational symmetry. For example, the shape when n=3 is a shape of three-fold symmetry that overlaps with itself when rotated by 120°.

The shape of the first hole may be, for example, a circle, a polygon, or a radial shape (e.g., a star shape).

The shape of the individual second hole may be a slit-like shape or a spot-like shape. Each of the spot-like shapes may be a circle, a polygon, or a radial shape (e.g., a star shape).

The aperture rate of the first insulating plate is not limited as long as it is 10% or more, but may be 20% or more, or may be 30% or more. However, when the aperture rate is too high, the function of the first insulating plate to prevent internal short circuit is reduced. Therefore, the aperture rate is desirably, for example, 50% or less, and may be 40% or less.

The number of the second holes is, for example, 3 or more, may be 6 or more, may be 20 or more, or may be 40 or more. However, when the number of the second holes is too large, the function of the first insulating plate to prevent internal short circuit is reduced. Therefore, the number of the second holes is desirably, for example, 100 or less, and may be 60 or less.

The first hole requires a size that is large enough to pass an electrode for welding therethrough, but in view of preventing internal short circuit, the opening area per one of the second holes is preferably small. That is, the opening area per one of the second holes is preferably smaller than the opening area of the first hole. Also, the opening area per one of the second holes is preferably 9% or less of the opening area of the first hole, and may be 8% or less. In order to allow the nonaqueous electrolyte to be retained in the individual second holes, the opening area per one of the second holes is preferably set to 50 mm² or more.

The first insulating plate may have any thickness, but in order to ensure mechanical strength and short-circuit resistance and maintain the battery capacity high, may have a thickness T of 0.05 mm or more and 3 mm or less. The thickness T of the first insulating plate is a thickness of the region other than the aperture of the first insulating plate. The average value of thicknesses measured at a plurality of points (e.g., five points) in the first insulating plate may be used as the thickness T.

Usually, the outline of the first insulating plate is circular or similar thereto (e.g., an elliptical shape, or a shape with a portion cut out from a circular or elliptical shape) in the plane direction (direction orthogonal to the thickness direction).

The first insulating plate can be formed from, for example, an insulating resin or a metal subjected to insulating treatment. In view of ensuring the strength of the first insulating plate, the first insulating plate is preferably formed from a material having a bending strength of 100 MPa or more. Among such materials, examples of the material that can be used as the insulating resin include, curing resins (thermosetting resins etc.), such as phenol resin, epoxy resin, and unsaturated polyester resin, and also include thermoplastic resins, such as polyolefin (e.g., polypropylene), polyphenylene sulfide resin, polyimide resin, polyamide imide resin, polyetherimide resin, and fluorocarbon resin (polytetrafluoroethylene etc.). Examples of the material that can be used as the metal include stainless steel and iron. The insulating treatment to the metal can be done by coating the metal with an insulating resin. The insulating resin for coating a metal includes, for example, but not limited to, polyimide resin and polypropylene resin. The first insulating plate may be formed from a material obtained by impregnating an insulating fibrous core material, such as glass fibers, with an insulating resin (thermosetting resin, such as phenol resin, etc.), followed by curing.

The material of the second insulating plate is not particularly limited, and may be selected from those exemplified for the first insulating plate. The first and second insulating plates may be each constituted of a core material made of an insulating fibrous material and an insulating resin.

The first insulating plate, which is disposed between the electrode group and the bottom of the battery case, is sometimes called a lower insulating plate. The first insulating plate has, for example, a disc shape as it is disposed directly below the electrode group having a cylindrical shape or a shape similar thereto.

The nonaqueous electrolyte may contain one kind of sulfur-containing compound, or may contain two or more kinds in combination. The sulfur-containing compound is used to improve the charge-discharge cycle characteristics of the battery. The content ratio of the sulfur-containing compound in the nonaqueous electrolyte is, for example, 0.01 mass% or more and 10 mass% or less, may be 0.25 mass% or more and 10 mass% or less, and may be 0.5 mass% or more and 10 mass% or less. A nonaqueous electrolyte containing a sulfur-containing compound at such a content ratio tends to cause the OCV of the battery in an over-discharged state to drop. Therefore, in the case of using such a nonaqueous electrolyte, the effect of suppressing the drop in OCV of the battery obtained by using the first insulating plate according to the present disclosure is likely to be apparent.

Note that, in a nonaqueous electrolyte secondary battery, the content ratio of the sulfur-containing compound in the nonaqueous electrolyte changes during storage or during charge-discharge cycles. Therefore, it suffices when the sulfur-containing compound remains in the nonaqueous electrolyte collected from the nonaqueous electrolyte secondary battery at a concentration equal to or higher than the detection limit.

When the nonaqueous electrolyte contains a sulfur-containing compound, a highly flexible solid electrolyte interface (SEI) is formed on the surface of the negative electrode active material. The highly flexible SEI easily follows the expansion and contraction of the negative electrode during charging and discharging. Thus, the decrease in capacity can be suppressed even when charging and discharging are repeated, and excellent cycle characteristics can be obtained.

The sulfur-containing compound desirably has one or more sulfonyl groups (-S(=O)₂-), and may have one or more fluorosulfonyl groups (F-S(=O)₂-). For example, the sulfur-containing compound may contain fluorosulfonic acid or a fluorosulfonic acid salt. Preferred among fluorosulfonic acid salts is lithium fluorosulfonate.

The sulfur-containing compound may be at least one selected from the group consisting of a sulfuric acid ester, a sulfurous acid ester, a sulfonic acid ester, and a sulfonylimide compound. Such a sulfur-containing compound preferably has an unsaturated bond as this facilitates the formation of a favorable SEI.

The sulfuric acid ester has a -O-S(=O)₂-O- structure. The sulfuric acid ester may be cyclic or chain, or may form a salt. As the sulfuric acid ester, a C₂₋₄ alkyl sulfate is preferred. Specific examples thereof include ethylene sulfate, propylene sulfate, trimethylene sulfate, butylene sulfate, vinylene sulfate, ethyl sulfate, and methyl sulfate.

The sulfurous acid ester has a -O-S(=O)-O- structure. The sulfurous acid ester may be cyclic or chain, or may form a salt. As the sulfurous acid ester, a C₂₋₄ alkylene sulfite is preferred. Specific examples include ethylene sulfite (ES), propylene sulfite, trimethylene sulfite, butylene sulfite, and vinylene sulfite.

The sulfonic acid ester has a -S(=O)₂-O- structure. The sulfonic acid ester may be cyclic or chain, or may form a salt. As the sulfonic acid ester, at least one selected from the group consisting of a C₃₋₅ alkane sultone and a C₃₋₅ alkene sultone is preferred. In particular, a cyclic sulfonic acid ester is desirable. Specific examples thereof include 1,3-propane sultone, 1,4-butane sultone, and 1,3-propene sultone. In particular, it is desirable to use 1,3-propene sultone having an unsaturated bond.

As the sulfur-containing compound, a sulfonylimide compound (sulfonylimide salt) may be used. Examples of the sulfonylimide salt include lithium bisfluorosulfonylimide (LiN(FSO₂)₂) (LiFSI), lithium bistrifluoromethanesulfonyl imide (LiN(CF₃SO₂)₂) (LiTFSI), lithium trifluoromethanesulfonyl nonafluorobutanesulfonyl imide (LiN(CF₃SO₂)(C₄F₉SO₂)), and lithium bispentafluoroethanesulfonyl imide (LiN(C₂F₅SO₂)₂).

In the sulfur-containing compound, one or two or more hydrogen atoms of the compounds exemplified above may be replaced with a substituent. Examples of the substituent include an alkyl group, a hydroxyalkyl group, a hydroxy group, an alkoxy group, and a halogen atom. The number of carbon atoms in the substituent may be 1 to 4 or 1 to 3. Examples of the halogen atom include a chlorine atom and a fluorine atom.

The first insulating plate according to the present embodiment will be specifically described below with reference to the drawings.

### [First embodiment]

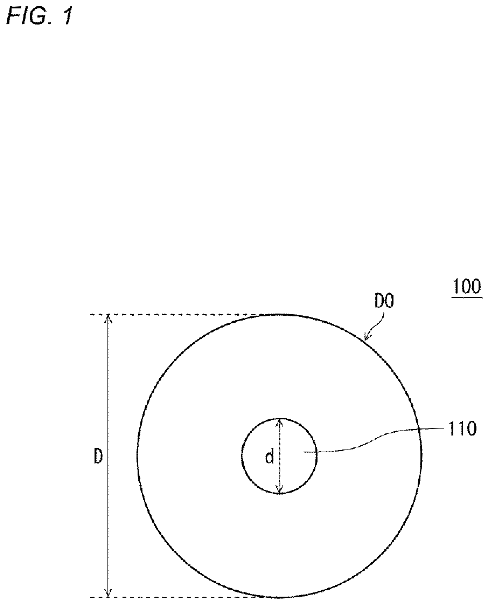

FIG. 1 is a schematic top view of a first insulating plate 10 according to one embodiment of the present disclosure. The outline of the first insulating plate 100 in FIG. 1 is circular. The first insulating plate 100 has a circular first hole 110 in the center. The aperture rate of the first insulating plate 100 is 10% or more. That is, the ratio of the area of the first hole 110 (area of a circle with a diameter d) to the area surrounded by the outline contour (area of a circle with an outer diameter D) of an orthographic projection D0 of the first insulating plate 100 from the direction normal to the principal surface of the first insulating plate 100 is 10% or more.

### [Second embodiment]

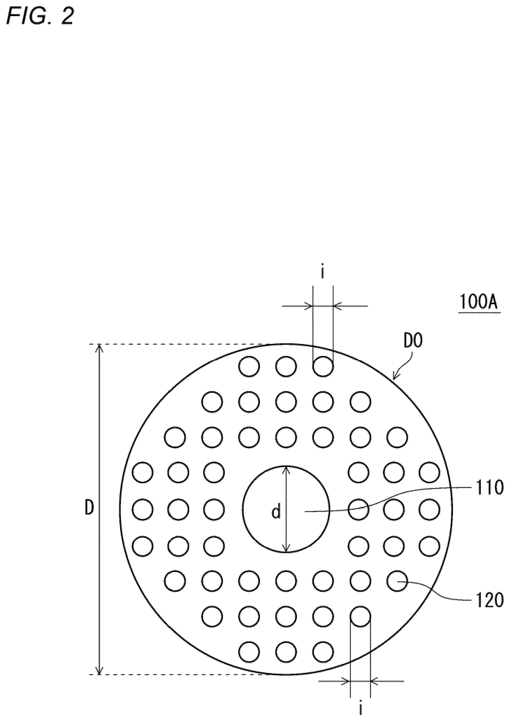

FIG. 2 is a schematic top view of a first insulating plate 100A according to one embodiment of the present disclosure. The outline of the first insulating plate 100A in FIG. 2 is circular. The first insulating plate 100 has a circular first hole 110 in the center. In addition, the first insulating plate 100 has a plurality(48) of second holes 120 around the first hole 110. The shape formed by the first hole 110 and the plurality of second holes 120 as a whole (i.e., the shape of the aperture) is a shape of rotational symmetry. The aperture of the first insulating plate 100A has a property (four-fold symmetry) that overlaps with itself when rotated by 360/4°. Note that the number of the second holes 110 is not limited to 48, and may be, for example, any number selected from 4 to 100 or 12 to 60. The rotational symmetry is not limited to three-fold symmetry, and may be any one selected from two- to ten-fold symmetry or three- to eight-fold symmetry.

The aperture rate of the first insulating plate 100A is, for example, 30% or more. That is, the ratio of a sum of the area of the first hole 110 (area of a circle with a diameter d) and the total area of the plurality (48) of second holes 120 (total area of circles each with a diameter i) to the area surrounded by the outline contour (area of a circle with an outer diameter D) of an orthographic projection D0 of the first insulating plate 100A from the direction normal to the principal surface of the first insulating plate 10A is 30% or more.

The opening area per one of the second holes 120 is sufficiently smaller than the opening area of the first hole. The opening area per one of the second holes 120 is 5% to 20% of the opening area of the first hole, and is 3 mm² to 17 mm². In the aperture rate, the proportion occupied by the first hole 110 only is 3% to 20%.

### [Third embodiment]

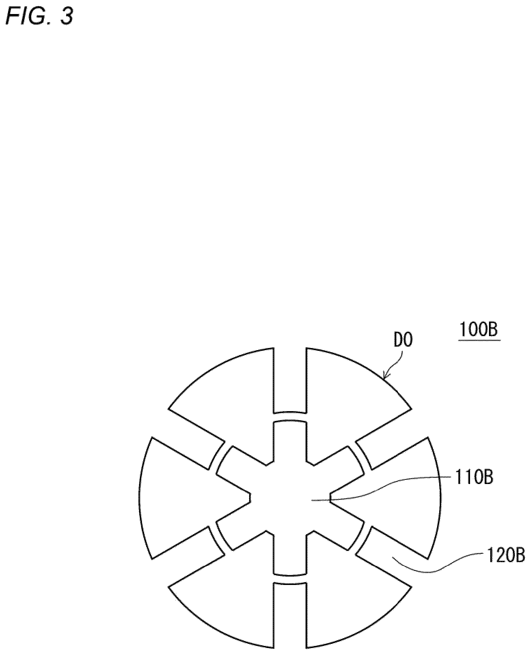

FIG. 3 is a schematic top view of a first insulating plate 100B according to one embodiment of the present disclosure. The outline of the first insulating plate 100B in FIG. 3 is circular. The first insulating plate 100B has, in the center, a first hole 110B having groove-like portions extending radially in six directions (having a star shape). In addition, the first insulating plate 100B has a plurality (six) of second holes 120B around the first hole 110B. The six second holes 120B are provided radially so as to correspond respectively to the six groove-like portions of the first hole 110B. The first insulating plate 110B is constituted of six fan-shaped portions and linking portions each linking adjacent fan-shaped portions. The number of circular sectors is not limited to six, and may be, for example, any number selected from three to ten.

The shape formed by the first hole 110B and the plurality of second holes 120B as a whole (i.e., the shape of the aperture) is a shape of rotational symmetry. The aperture of the first insulating plate 100B has a property (six-fold symmetry) that overlaps with itself when rotated by 360/6°.

The aperture rate of the first insulating plate 100B is 30% or more. That is, the ratio of a sum of the area of the first hole 110B and the total area of the plurality (six) of second holes 120B (total area of through-grooves) to the area surrounded by the outline contour (area of a circle with an outer diameter D) of an orthographic projection D0 of the first insulating plate 100B from the direction normal to the principal surface of the first insulating plate 10A is 30% or more.

The opening area per one of the second holes 120B is sufficiently smaller than the opening area of the first hole 110B. The opening area per one of the second holes 120B is 20% to 50% of the opening area of the first hole 110B, and is 17 mm² to 42 mm². In the aperture rate, the proportion occupied by the first hole 110B only is 20% to 50%.

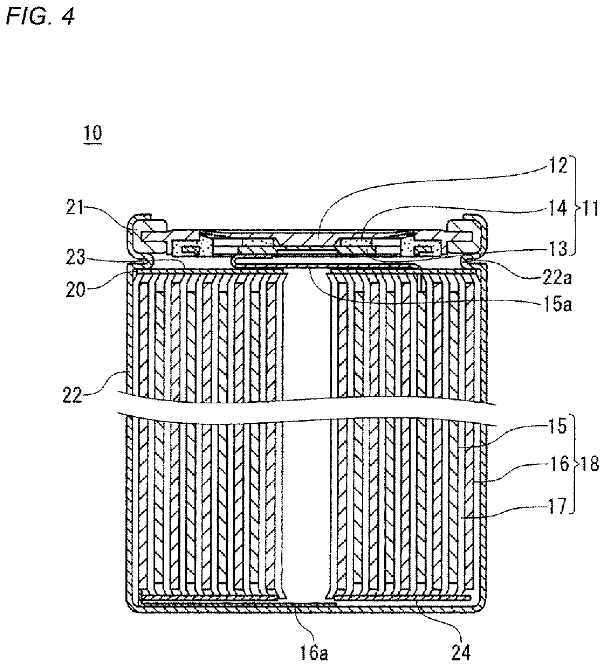

In the following, a nonaqueous electrolyte secondary battery according to the present disclosure will be specifically described for each constituent element with reference to FIG. 4.

A nonaqueous electrolyte secondary battery according to the present embodiment includes a wound electrode group, a nonaqueous electrolyte, a cylindrical battery case housing them, a sealing body sealing the opening of the battery case, a first insulating plate disposed between the electrode group and the bottom of the battery case, and a second insulating plate disposed between the electrode group and the sealing body. The sealing body includes an air vent valve.

FIG. 4 is a schematic longitudinal sectional view of a nonaqueous electrolyte secondary battery according to one embodiment of the present disclosure. The nonaqueous electrolyte secondary battery according to the present embodiment will be specifically described with reference to FIG. 4, using a lithium-ion secondary battery as an example.

A cylindrical nonaqueous electrolyte secondary battery (hereinafter, battery) 10 includes an electrode group 18, a nonaqueous electrolyte (not shown), and a battery case (battery can) 22 housing them. The electrode group 18 is formed by winding a positive electrode plate 15 and a negative electrode plate 16 with a separator 17 interposed therebetween. An annular groove 22a is formed near the open end of the battery can 22.

The opening of the battery can 22 is sealed with a sealing body 11 having a gasket 21 around its periphery. The sealing body 11 includes a valve body 12, a metal plate 13, and an annular insulating member 14 interposed between the outer periphery of the valve body 12 and the outer periphery of the metal plate 13. The valve body 12 and the metal plate 13 are connected to each other at their respective center portions. A positive electrode lead 15a drawn out from the positive electrode 15 is connected to the metal plate 13. Thus, the valve body 12 functions as an external terminal of the positive electrode. A negative electrode lead 16a drawn out from the negative electrode 16 is connected (welded) to the inner surface of the bottom of the battery can 22. A first insulating plate 24 is disposed between one end face of the electrode group 18 and the bottom of the battery can 22. A second insulating plate 23 is disposed between the sealing body 11 and the other end face of the electrode group 18.

In the present disclosure, it is desirable to set the thickness T of the first insulating plate to 0.05 mm or more and 3 mm or less, and more desirably to 0.1 mm or more and 1 mm or less.

The outer diameter of the battery is, for example, 18 mm or more and 40 mm or less, and may be 18 mm or more and 26 mm or less. Even when the outer diameter of the battery is 18 mm or more and 26 mm or less, the strength of the first insulating plate is likely to be ensured by setting the thickness T of the first insulating plate to 0.05 mm or more and 3 mm or less. The thickness T of the first insulating plate may be set to 0.1 mm or more and 1 mm or less.

In the following, the nonaqueous electrolyte secondary battery according to the present disclosure will be more specifically described for each constituent element.

### [Positive electrode]

The positive electrode includes a positive electrode current collector, and a positive electrode mixture layer provided on a surface of the positive electrode current collector. The positive electrode current collector is constituted of a sheet of conductive material. The positive electrode mixture layer is supported on one or both surfaces of the positive electrode current collector. The positive electrode mixture layer is usually a layer or film constituted of a positive electrode mixture. The thickness of the positive electrode mixture layer is, for example, 10 µm to 150 µm per one side of the positive electrode current collector. The positive electrode mixture contains a positive electrode active material as an essential component.

The positive electrode mixture layer may contain a conductive agent as an optional component. Examples of the conductive agent include carbon-based materials, such as carbon black (CB), acetylene black (AB), Ketjen black, carbon nanotubes (CNTs), graphene, and graphite. These may be used singly or in combination of two or more kinds.

The positive electrode mixture layer may contain a binder. Examples of the binder include fluorocarbon-based resins, such as polytetrafluoroethylene (PTFE) and polyvinylidene fluoride (PVDF), polyacrylonitrile (PAN), polyimide-based resins, acrylic resins, and polyolefin-based resins. These may be used singly or in combination of two or more.

As the positive electrode current collector, a non-porous conductive substrate (metal foil, etc.) and a porous conductive substrate (mesh, net, punched sheet, etc.) are used. Examples of the material of the positive electrode current collector include aluminum, aluminum alloy, titanium, and titanium alloy.

As the positive electrode active material, a lithium-containing composite oxide can be used. The lithium-containing composite oxide may have a layered rock-salt structure. The layered rock-salt structure may belong to, for example, the space group R-3m, the space group C2/m, or the like. In particular, a layered rock-salt structure belonging to the space group R-3m is preferred because of its high capacity and high stability of the crystal structure. The layered rock-salt structure of the lithium-containing composite oxide may include a transition metal layer, a Li layer, and an oxygen layer.

In view of achieving high capacity, the ratio of Ni (Ni content) in the metal elements other than Li contained in the lithium-containing composite oxide may be set to 50 atom% or more, may be set to 80 atom% or more, and may be set to 90 atom% or more.

In view of stabilizing the crystal structure of the lithium-containing composite oxide and improving the heat resistance of the battery, the ratio of Co (Co content) in the metal elements other than Li contained in the lithium-containing composite oxide may be set to 0 atom% or more and 16 atom% or less, and may be set to 1.5 atom% or more and 16 atom% or less.

Likewise, in view of stabilizing the crystal structure of the lithium-containing composite oxide and improving the heat resistance of the battery, the ratio of Al (Al content) in the metal elements other than Li contained in the lithium-containing composite oxide may be set to 0 atom% or more and 18.5 atom% or less, and may be set to 4 atom% or more and 10 atom% or less.

In view of cost reduction, the ratio of Mn (Mn content) in the metal elements other than Li contained in the lithium-containing composite oxide may be set to 0 atom% or more and 50 atom% or less, and may be set to 0 atom% or more and 30 atom% or less.

The content ratio of each metal element in the lithium-containing composite oxide is measured by, for example, inductively coupled plasma (ICP) atomic emission spectrometry.

The lithium-containing composite oxide may be, for example, a composite oxide represented by a general formula LiₐNiₓCo_{y}Al_{z}M1_{w}O_{2-b}, where 0.8 ≤ a ≤ 1.2, 0.80 ≤ x ≤ 0.95, 0.015 ≤ y ≤ 0.16, 0.04 ≤ z ≤ 0.185, 0 ≤ w ≤ 0.145, 0 ≤ b < 0.05, x+y+z+w = 1, and M1 is at least one element selected from Mn, Fe, Ti, Si, Nb, Zr, Mo, and Zn. In this case, M1 is preferably Mn.

### [Negative electrode]

The negative electrode includes at least a negative electrode collector, and may have a negative electrode mixture layer provided on a surface of the negative electrode collector. The negative electrode collector is constituted of a sheet of conductive material. The negative electrode mixture layer is supported on one or both surfaces of the negative electrode collector. The negative electrode mixture layer is usually a layer or film constituted of a negative electrode mixture. The thickness of the negative electrode mixture layer is, for example, 10 µm to 150 µm per one side of the negative electrode current collector. The negative electrode mixture contains a negative electrode active material as an essential component, and may contain a binder, a conductive agent, a thickener, and the like as optional components. Known materials can be used as the binder, the conductive agent, and the thickener.

The negative electrode active material includes a material that electrochemically absorbs and releases lithium ions, lithium metal, lithium alloy, and the like. As a material that electrochemically absorbs and releases lithium ions, a carbon material, an alloy-type material, and the like are used. Examples of the carbon material include graphite, graphitizable carbon (soft carbon), and non-graphitizable carbon (hard carbon). In particular, graphite is preferable because of its excellent stability during charging and discharging, and small irreversible capacity. The alloy-type material is a material that contains at least one metal capable of forming an alloy with lithium. As such a material, silicon, tin, silicon alloy, tin alloy, a silicon compound, and the like may be used. Silicon oxide, tin oxide, and the like may also be used.

Preferred as an alloy-type material containing silicon is a silicon-containing material containing a lithium-ion conductive phase and silicon phases dispersed in the lithium-ion conductive phase.

The lithium-ion conductive phase may be, for example, a silicon oxide phase, a silicate phase, a carbon phase, and the like. The major component of the silicon oxide phase (e.g., 95 to 100 mass%) can be silicon dioxide. The silicate phase is preferred in that the irreversible capacity is small. In particular, a silicate phase containing lithium (hereinafter sometimes referred to as a lithium silicate phase) can be preferably used as a lithium-ion conductive phase having high charge-discharge efficiency in the early stage.

The lithium silicate phase is an oxide phase containing lithium (Li), silicon (Si), and oxygen (O), and may contain other elements. The atomic ratio O/Si of O to Si in the lithium silicate phase is, for example, more than 2 and less than 4. Preferably, the O/Si is more than 2 and less than 3. The atomic ratio Li/Si of Li to Si in the lithium silicate phase is, for example, more than 0 and less than 4. The lithium silicate phase can have a composition represented by a formula: Li_{2z}SiO_{2+z}, where 0 < z < 2. Preferably, z satisfies 0 < z < 1, and more preferably z = 1/2. Examples of the elements other than Li, Si, and O that may be contained in the lithium silicate phase include iron (Fe), chromium (Cr), nickel (Ni), manganese (Mn), copper (Cu), molybdenum (Mo), zinc (Zn), and aluminum (Al).

The carbon phase can be constituted of, for example, formless carbon with low crystallinity (i.e., amorphous carbon). The formless carbon may be, for example, hard carbon, soft carbon, or others.

As the negative electrode active material, a silicon-containing material and a carbon material may be used in combination. The silicon-containing material expands and contracts in volume during charging and discharging. Therefore, when the ratio thereof in the negative electrode active material increases, contact failure between the negative electrode active material and the negative electrode current collector tends occur in association with charging and discharging. On the other hand, by using a silicon-containing material and a carbon material in combination, while imparting high capacity to the negative electrode, it is possible to achieve excellent cycle characteristics.

The ratio of the silicon-containing material to the total of the silicon-containing material and the carbon material is, for example, preferably 0.5 to 15 mass%, more preferably 1 to 10 mass%. This makes it easier to achieve both high capacity and improved cycle characteristics.

As the negative electrode current collector, a non-porous conductive substrate (metal foil, etc.) and a porous conductive substrate (mesh, net, punched sheet, etc.) are used. Examples of the material of the negative electrode current collector include stainless steel, nickel, nickel alloy, copper, and copper alloy.

### [Nonaqueous electrolyte]

The nonaqueous electrolyte contains a nonaqueous solvent and a solute dissolved in the nonaqueous solvent. The solute includes, for example, a lithium salt. The components of the nonaqueous electrolyte other than the nonaqueous solvent and the solute are additives. The nonaqueous electrolyte includes the already-described sulfur-containing compound as an additive.

As the nonaqueous solvent, for example, a cyclic carbonic acid ester, a chain carbonic acid ester, a cyclic carboxylic acid ester, a chain carboxylic acid ester, and the like are used. Examples of the cyclic carbonic acid ester include propylene carbonate (PC), ethylene carbonate (EC), and vinylene carbonate (VC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL), and γ-valerolactone (GVL). Examples of the chain carboxylic acid ester include methyl acetate, ethyl acetate, propyl acetate, methyl propionate (MP), and ethyl propionate (EP). The nonaqueous solvent may be used singly or in combination of two or more kinds.

As the lithium salt, for example, a lithium salt of a chlorine-containing acid (LiClO₄, LiAlCl₄, LiB₁₀Cl₁₀, etc.), a lithium salt of a fluorine-containing acid (LiPF₆, LiPF₂O₂, LiBF₄, LiSbF₆, LiAsF₆, LiCF₃SO₃, LiCF₃CO₂, etc.), a lithium salt of a fluorine-containing acid imide (LiN(FSO₂)₂, LiN(CF₃SO₂)₂, LiN(CF₃SO₂)(C₄F₉SO₂), LiN(C₂F₅SO₂)₂, etc.), a lithium halide (LiCl, LiBr, LiI, etc.), and the like can be used. The lithium salt may be used singly or in combination of two or more kinds.

The lithium salt concentration in the nonaqueous electrolyte may be 1 mol/liter or more and 2 mol/liter or less, and may be 1 mol/liter or more and 1.5 mol/liter or less. By controlling the lithium salt concentration within the above range, an electrolyte solution having excellent ion conductivity and moderate viscosity can be obtained. The lithium salt concentration, however, is not limited to the above.

### [Separator]

It is desirable to interpose a separator between the positive electrode and the negative electrode. The separator is excellent in ion permeability and has moderate mechanical strength and electrically insulating properties. As the separator, a microporous thin film, a woven fabric, a nonwoven fabric, and the like can be used. The material of the separator is preferably a polyolefin, such as polypropylene and polyethylene.

### [Examples]

The present invention will be more specifically described below with reference to Examples and Comparative Examples. The present invention, however, is not limited to the following Examples.

### <<Example 1>>

### (1) Production of positive electrode

First, 100 parts by mass of a positive electrode active material (LiNi_{0.8}Co_{0.15}Al_{0.05}O₂), 1.7 parts by mass of a binder (polyvinylidene fluoride), and 2.5 parts by weight of a conductive agent (acetylene black) were added into a dispersion medium, and kneaded together, to prepare a positive electrode mixture slurry. Next, the positive electrode mixture slurry was applied onto both surfaces of a positive electrode collector made of aluminum foil, dried, and rolled, to form positive electrode active material layers, followed by cutting into a predetermined size, to obtain a positive electrode.

### [Negative electrode]

### (2) Production of negative electrode plate

First, 100 parts by mass of a negative electrode active material (graphite), 0.6 parts by mass of a binder (styrene butadiene rubber), and 1 part by weight of a thickener (carboxymethyl cellulose) were added into a dispersion medium, and kneaded together, to prepare a negative electrode mixture slurry. Next, the negative electrode mixture slurry was applied onto both surfaces of a negative electrode current collector made of copper foil, dried and rolled, to form negative electrode active material layers, followed by cutting into a predetermined size, to obtain a negative electrode.

### [Preparation of nonaqueous electrolyte]

Ethylene carbonate (EC), ethyl methyl carbonate (EMC), and dimethyl carbonate (DMC) were mixed in a volume ratio of 3:3:4. In the resultant mixed solvent, lithium hexafluorophosphate (LiPF₆) was dissolved at a concentration of 1.2 mol/L, to prepare a nonaqueous electrolyte. In the nonaqueous electrolyte, 1,3-propene sultone (PRES), which was a sulfur-containing compound, was dissolved at a content ratio of 0.5 mass%.

### [Fabrication of test cell]

With a positive electrode lead attached to an exposed portion of the positive electrode current collector, and a negative electrode lead attached to the negative electrode current collector, the positive electrode and the negative electrode were wound with a polyolefin microporous membrane (separator) interposed therebetween, to prepare an electrode group. The electrode group, together with a first insulating plate (aperture rate 35%, number of second holes 48) as shown in FIG. 2 placed on the lower end face, was inserted into a battery can, and the negative electrode lead was resistance welded to the bottom of the battery can. The battery can used here was an iron can having an inner surface plated with nickel.

The opening area per one of the second holes 120B was 8% of the opening area of the first hole 110B, and was 7 mm². In the aperture rate, the proportion occupied by the first hole 110B only was 7%.

A disc-shaped second insulating plate made of glass fibers impregnated with phenolic resin was placed on the upper end face of the electrode group, and then, an annular groove was formed near the open end of the battery can. The thickness T of the first insulating plate was 0.2 mm.

Next, a positive electrode lead was connected to the metal plate of the safety mechanism included in a sealing body, and after the nonaqueous electrolyte was injected into the iron battery can, the sealing body was supported via a gasket in an annular groove formed in the battery can. The open end of the battery can was crimped onto the periphery of the sealing body, to complete a lithium-ion secondary battery (battery A1).

### [Evaluation]

In a 25 °C environment, a constant-current discharging was performed at a current of 0.2C from a charged state until the voltage of the nonaqueous electrolyte secondary battery reached 2.5 V. Thereafter, with the positive electrode and the negative electrode electrically connected to each other via a resistor of 1 kΩ, the battery was left to stand at 60 °C for 34 days, to be in an over-discharged state. The battery voltage (OCV) after 34 days is shown in Table 1.

**[Table 1]**

| battery | first insulating plate aperture rate (%) | nonaqueous electrolyte | | OCV in over-discharged state (V) |
|---|---|---|---|---|
| | | sulfur-containing compound | content (mass%) | |
| A1 | 35 | PRES | 0.5 | 0.134 |
| A2 | 35 | LiFSI | 4.1 | 0.129 |
| B1 | 7 | without | - | 0.223 |
| B2 | 7 | PRES | 0.5 | 0.031 |
| B3 | 7 | LiFSI | 4.1 | 0.000 |
| B4 | 35 | without | - | 0.225 |

### <<Example 2>>

A battery A2 of Example 2 was fabricated and evaluated in the same manner as in Example 1, except that 1,3-propene sultone (PRES) was not added to the nonaqueous electrolyte, and lithium hexafluorophosphate (LiPF₆) and lithium bisfluorosulfonylimide (LiN(FSO₂)₂) (LiFSI) were dissolved in the nonaqueous electrolyte at a concentration of 0.9 mol/L and 0.3 mol/L, respectively.

### <<Comparative Example 1>>

A battery B1 of Comparative Example 1 was fabricated and evaluated in the same manner as in Example 1, except that a first insulating plate having only the first hole in the center and an aperture rate of 7% (i.e., less than 10%) was used, and 1,3-propene sultone (PRES) was not added to the nonaqueous electrolyte.

### <<Comparative Example 2>>

A battery B2 of Comparative Example 2 was fabricated and evaluated in the same manner as in Example 1, except that a first insulating plate having only the first hole in the center and an aperture rate of 7% (i.e., less than 10%) was used.

### <<Comparative Example 3>>

A battery B3 of Comparative Example 3 was fabricated and evaluated in the same manner as in Example 2, except that a first insulating plate having only the first hole in the center and an aperture rate of 7% (i.e., less than 10%) was used.

### <<Comparative Example 4>>

A battery B4 of Comparative Example 4 was fabricated and evaluated in the same manner as in Example 1, except that 1,3-propene sultone (PRES) was not added to the nonaqueous electrolyte.

Table 1 shows that when the nonaqueous electrolyte contained no sulfur-containing compound, the OCV of the battery was maintained relatively high, regardless of the form of the first insulating plate. On the other hand, when the nonaqueous electrolyte contained a sulfur-containing compound, the OCV of the battery was considerably changed depending on the form of the first insulating plate. Specifically, in Comparative Examples 2 and 3, in which the aperture rate of the first insulating plate was less than 10%, the OCV dropped to 0.031 V or 0 V, whereas in Examples 1 and 2, in which the aperture rate of the first insulating plate was 10% or more, the OCV was maintained at 0.134 V or 0.129 V.

### [Additional notes]

The present disclosure includes embodiments additionally noted below.
(1) A nonaqueous electrolyte secondary battery, comprising:
   a wound electrode group;
   a nonaqueous electrolyte;
   a battery case having a cylindrical shape and housing the electrode group and the nonaqueous electrolyte;
   a sealing body sealing an opening of the battery case; and
   an insulating plate disposed between the electrode group and a bottom of the battery case, wherein
   the nonaqueous electrolyte contains a sulfur-containing compound,
   the insulating plate has an aperture, and
   an aperture rate of the insulating plate is 10% or more.
(2) A nonaqueous electrolyte secondary battery, comprising:
   a wound electrode group;
   a nonaqueous electrolyte;
   a battery case having a cylindrical shape and housing the electrode group and the nonaqueous electrolyte;
   a sealing body sealing an opening of the battery case; and
   an insulating plate disposed between the electrode group and a bottom of the battery case, wherein
   the nonaqueous electrolyte contains a sulfur-containing compound,
   the insulating plate has an aperture, and
   the aperture has a plurality of mutually independent regions.
(3) The nonaqueous electrolyte secondary battery according to the above (1) or (2), wherein the aperture includes a first hole provided in a center of the insulating plate.
(4) The nonaqueous electrolyte secondary battery according to any one of the above (1) to (3), wherein the aperture further includes at least one second hole which is different from the first hole.
(5) The nonaqueous electrolyte secondary battery according to any one of the above (1) to (4), wherein
   a plurality of the second holes are provided around the first hole, and
   a shape of the aperture is a shape of rotational symmetry.
(6) The nonaqueous electrolyte secondary battery according to any one of the above (1) to (5), wherein a shape of each of the second holes is a slit-like shape.
(7) The nonaqueous electrolyte secondary battery according to any one of the above (1) to (6), wherein a shape of each of the second holes is a spot-like shape.
(8) The nonaqueous electrolyte secondary battery according to any one of the above (1) to (7), wherein the number of the second holes is 6 or more.
(9) The nonaqueous electrolyte secondary battery according to any one of the above (1) to (8), wherein an aperture rate per one of the second holes is smaller than an aperture rate of the first hole.
(10) The nonaqueous electrolyte secondary battery according to any one of the above (1) to (9), wherein a content ratio of the sulfur-containing compound in the nonaqueous electrolyte is 0.25 mass% or more and 10 mass% or less.
(11) The nonaqueous electrolyte secondary battery according to any one of the above (1) to (10), wherein the sulfur-containing compound has one or more sulfonyl groups.
(12) The nonaqueous electrolyte secondary battery according to any one of the above (1) to (11), wherein the sulfur-containing compound has one or more fluorosulfonyl groups.
(13) The nonaqueous electrolyte secondary battery according to any one of the above (1) to (12), wherein the sulfur-containing compound has an unsaturated bond.
(14) The nonaqueous electrolyte secondary battery according to any one of the above (1) to (13), wherein the sulfur-containing compound includes a cyclic sulfonic acid ester.

### [Industrial Applicability]

The present disclosure is applicable to nonaqueous electrolyte secondary batteries, such as lithium-ion secondary batteries. According to the present disclosure, it is possible to suppress the drop in open circuit voltage (OCV) of the battery in an over-discharged state.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

10: nonaqueous electrolyte secondary battery, 11: sealing body, 12: valve body, 13: metal plate, 14: insulating member, 15: positive electrode, 15a: positive electrode lead, 16: negative electrode, 16a: negative electrode lead, 17: separator, 18: electrode group, 21: gasket, 22: battery can, 22a: annular groove, 23: second insulating plate, 24: first insulating plate, 100, 100A, 100B: first insulating plate, 110, 110B: first hole, 120, 120B: second hole.

## Claims

1. A nonaqueous electrolyte secondary battery, comprising:
a wound electrode group;
a nonaqueous electrolyte;
a battery case having a cylindrical shape and housing the electrode group and the nonaqueous electrolyte;
a sealing body sealing an opening of the battery case; and
an insulating plate disposed between the electrode group and a bottom of the battery case, wherein
the nonaqueous electrolyte contains a sulfur-containing compound,
the insulating plate has an aperture, and
an aperture rate of the insulating plate is 10% or more.

2. A nonaqueous electrolyte secondary battery, comprising:
a wound electrode group;
a nonaqueous electrolyte;
a battery case having a cylindrical shape and housing the electrode group and the nonaqueous electrolyte;
a sealing body sealing an opening of the battery case; and
an insulating plate disposed between the electrode group and a bottom of the battery case, wherein
the nonaqueous electrolyte contains a sulfur-containing compound,
the insulating plate has an aperture, and
the aperture has a plurality of mutually independent regions.

3. The nonaqueous electrolyte secondary battery according to claim 1 or 2, wherein the aperture includes a first hole provided in a center of the insulating plate.

4. The nonaqueous electrolyte secondary battery according to claim 3, wherein the aperture further includes at least one second hole which is different from the first hole.

5. The nonaqueous electrolyte secondary battery according to claim 4, wherein
a plurality of the second holes are provided around the first hole, and
a shape of the aperture is a shape of rotational symmetry.

6. The nonaqueous electrolyte secondary battery according to claim 5, wherein a shape of each of the second holes is a slit-like shape.

7. The nonaqueous electrolyte secondary battery according to claim 5, wherein a shape of each of the second holes is a spot-like shape.

8. The nonaqueous electrolyte secondary battery according to claim 5, wherein the number of the second holes is 3 or more.

9. The nonaqueous electrolyte secondary battery according to claim 5, wherein an opening area per one of the second holes is smaller than an opening area of the first hole.

10. The nonaqueous electrolyte secondary battery according to claim 1 or 2, wherein a content ratio of the sulfur-containing compound in the nonaqueous electrolyte is 0.01 mass% or more and 10 mass% or less.

11. The nonaqueous electrolyte secondary battery according to claim 1 or 2, wherein the sulfur-containing compound has one or more sulfonyl groups.

12. The nonaqueous electrolyte secondary battery according to claim 1 or 2, wherein the sulfur-containing compound has one or more fluorosulfonyl groups.

13. The nonaqueous electrolyte secondary battery according to claim 1 or 2, wherein the sulfur-containing compound has an unsaturated bond.

14. The nonaqueous electrolyte secondary battery according to claim 1 or 2, wherein the sulfur-containing compound includes a cyclic sulfonic acid ester.
